# EUROPEAN PATENT SPECIFICATION

(11) **EP 3 313 554 B1**
(45) Date of publication and mention of the grant of the patent: **11.12.2019**
(21) Application number: 16736215.1
(22) Date of filing: 23.06.2016
(51) Int. Cl.: B01D 61/02, B01D 61/08, B01D 61/14, B01D 61/18, C02F 1/00, C02F 1/44, F04F 5/10, F04F 5/46

(54) **HIGH EFFICIENCY MEMBRANE FILTRATION**
HOCHEFFIZIENTE MEMBRANFILTRATION
FILTRATION PAR MEMBRANE HAUTE EFFICACITÉ

(30) Priority: 24.06.2015 FI 20155499
(43) Date of publication of application: 02.05.2018
(73) Proprietor: EMP-Innovations OY, 04230 Kerava (FI)
(72) Inventor: AULANKO, Esko, 04230 Kerava (FI)
(74) Representative: Salomäki, Juha Kari Ensio
(86) International application number: PCT/FI2016/050458
(87) International publication number: WO 2016/207491

(56) References cited:
- EP-A1- 2 730 330
- WO-A1-80/00310
- WO-A1-2005/007579
- WO-A1-2012/138502
- WO-A1-2012/175804
- US-A- 4 983 301

## Description

The object of the invention is membrane filtration, more particularly the invention relates to an apparatus, to method and an arrangement, with which membrane filtration is delivered. One object of the invention is reverse osmosis filtration or inverted filtration separation.

Membrane filters are very widely used in industry and elsewhere for water purification as well as for other purposes. Membrane filtration technology is also a developing field, in which new techniques and opportunities for different applications and uses are emerging.

The operation of a membrane filter, which can also be called a membrane separator, can be described in a simplified manner as follows: The permeable membrane to be used, which possesses certain properties, allows a permeate, e.g. water, to pass through it and retains other materials. In practice, the separation in membrane filters is not perfect, in which case the result of the separation is permeate that passed through the membrane and the concentrate, or corresponding, obtained from the material to be filtered. Often permeate is the intended product, e.g. when purifying water, but membrane separation can be used for concentrating the sought material, e.g. when recovering process chemicals or when concentrating solutions. A generally used membrane filtration method for liquids is so-called cross flow filtering. Cross flow filtering is in use in many different types of membrane filtering methods, e.g. in reverse osmosis filtration, nanofiltration, ultrafiltration and microfiltration. In cross flow filtering the material to be purified is brought to flow in the direction of the surface of the filtering membrane in which case, although some of the material filters through the membrane, the material to be purified rinses the surface of the membrane and in this way keeps the membrane permeable while preventing clogging or a large local concentration on the surface of the membrane. The driving force in membrane filtration is a pressure difference across the membrane. Energy is also needed, apart from overcoming the resistance caused by the membrane, for moving and conducting the liquids in the different phases of the process as well as for raising the pressure of the liquid to the operating pressure needed. Membrane filter devices and their components are generally available for various purposes. Membrane filter plants and devices are fabricated from commercially available components and are based on generally known techniques. For example, reverse osmosis filters are commercially available for various applications and suitably also for the treatment of various solutions and for the separation of many types of substances, and, inter alia, filters for salt removal can be optimized and also the salt content ratio of the water to be treated can be selected.

Prior art patent publications WO2012175804 A1, WO2012138502 A1 and EP2730330 A1 disclose membrane filter arrangements showing aspects of the present invention.

The aim of this invention is to develop membrane filtration and to achieve inexpensive, reliable, safe and well functioning membrane filtration solutions. More particularly the invention aims for reverse osmosis filtration solutions, nanofiltration solutions, ultrafiltration solutions and microfiltration solutions and especially the type of solutions that are suitable for use in the reverse osmosis enrichment or reverse osmosis purification of aqueous solutions. The features characteristic to the invention are presented in the claims, in which also the embodiments of the invention that are believed to be advantageous are disclosed.

An important advantage to be achieved with the invention is a high coefficient of efficiency for membrane filtration. In particular, the favorable, at least momentary, avoidance of pressure losses to be achieved with an implementation of the invention assists in reaching a high coefficient of efficiency. An advantageous aspect of the invention relates savings in pipelines, which are result from using vessels equipped with filter membranes as return paths for a circular liquid flow. These savings of pipelines are not only material savings, but shorter pipelines also contribute for lower energy losses due to the shorter flow paths. The invention may appear as a water treatment apparatus, which advantageously is used for desalination or water purifying purposes. Also other advantages can be achieved with the invention.

The present invention relates to a filter apparatus in which at least two pressure vessels, each pressure vessel containing at least one membrane filter, are arranged in a circle so that concentrate outlet of one pressure vessel is connected to the liquid feed inlet of the adjacent pressure vessel. Preferably the invention appears as a filter apparatus comprising at least two pressure vessels, each pressure vessel containing at least one membrane filter, the membrane filter or the membrane filters arranged in the pressure vessels according the cross-filtration principle so that liquid feed entered to a pressure vessel is divided to a permeate part and to a concentrate part, each pressure vessel comprising an inlet for liquid feed and a concentrate outlet for concentrate and a permeate outlet for permeate, and at least two of the pressure vessels are arranged in a circle by connecting the concentrate outlet of a pressure vessel to the liquid feed inlet of the adjacent pressure vessel.

The present invention relates to a filter apparatus comprising a first pressure vessel and a second pressure vessel, each pressure vessel containing a membrane filter, the membrane filter arranged according the cross-filtration principle so that liquid feed entered to a pressure vessel is divided to a permeate part and to a concentrate part, each pressure vessel comprising an inlet for liquid feed and a concentrate outlet for concentrate and a permeate outlet for permeate, and the concentrate outlet of the second pressure vessel is connected to inlet of the first pressure vessel and the concentrate outlet of the first pressure vessel is connected to inlet of the second pressure vessel.

The apparatuses of the invention comprise a nozzle feeding pressurized liquid towards liquid feed inlet in the liquid path connecting the concentrate outlet and the liquid feed inlet.

An advantageous way to use the invention is to accommodate vessels with reverse osmosis membrane filters.

A preferred way to carry out the invention is to arrange liquid circulation in membrane filtration so, that concentrate of a membrane filter is at least partly circulated back to be filtrated in said membrane filter via one or more further membrane filters. Preferably new liquid is provided between each pressure vessel arranged in the circle.

Preferably the liquid circulation is powered by using jet pumps between each adjacent membrane filters and for feeding new liquid into the circulation. Sometimes jet pumps are called Venturi pumps.

An aspect of the invention to provide a method for arranging liquid circulation in membrane filtration. New liquid is provided between each pressure vessel to a pressurized inlet of a membrane filter and concentrate of a membrane filter is at least partly circulated back to be filtrated in said membrane filter via one or more further membrane filters so that said circulated concentrate is fed to the pressurized inlet of said membrane filter. A high pressure pump is used to feed new liquid to the inlet of a membrane, i.e. to the inlet of the vessel containing the membrane. The high pressure pump feeds the new liquid via a nozzle of a jet pump. Preferably the circulation between adjacent membrane filters and all feeding new liquid into the circulation is arranged by jet pumps arranged between such membrane filters.

A further aspect of the invention is arrangement in which plurality of pressure vessels, each pressure vessel containing at least one membrane filter. The concentrate outlet of one of the pressure vessels is connected to the pressurized inlet of another pressure vessel and the concentrate outlet of a further pressure vessel is connected to the pressurized inlet of another pressure vessel. In the following the invention will be described in more detail by the aid of one example of its embodiment with reference to the attached drawings illustrating aspects of the invention,
- Fig. 1: presents a sub-unit suitable to be used in the invention,
- Fig. 2: presents a simplified two vessel configuration

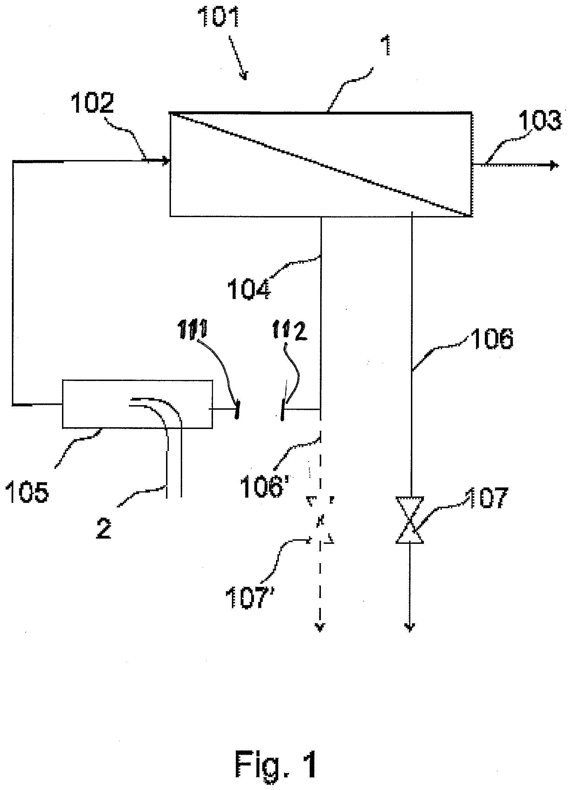

Fig. 1 presents schematically a sub-unit 101 applicable to be used in the invention. The sub-unit 101 comprises a membrane filter unit 1, typically being a pressure vessel wherein one or more membrane filters is contained, with piping connections, and a flow channel 105, into which connects a nozzle 2 feeds new liquid from pressure source, such as a pump. When sub-unit 101 is used in an apparatus according to the invention the flow channel forms or at least is a part of the connection between two pressure vessels. The membrane filter unit 1 is, in practice, a vessel that holds pressure, inside which vessel a filter membrane, e.g. a reverse osmosis filter membrane, is arranged. The membrane filter unit 1 comprises an inlet connection 102 for conducting liquid in process, e.g. aqueous solution, into the membrane filter unit 1, a first outlet connection 103 for conducting permeate from the membrane filter unit 1 and a second outlet connection 104 for conducting concentrate from the membrane filter unit 1. The connections 102, 103 and 104 can be regarded as being single ones in the membrane filter unit, to which are connected with a pipe, or the connections 102, 103, 104 can also be regarded as comprising pipes with which they are connected to other parts of sub-unit. The second outlet connection of sub-unit 101 is connected to a flow channel leading to the inlet connection 102 of the liquid treatment device 101, in which case the concentrate is able to circulate back. Joints 111 and 112 represents schematic connection points for connecting adjacent sub-units. The inlet 102 is pressurized to the pressure, which is about the output pressure of the high pressure pump 200 feeding new liquid in to the circulation. By connecting always joint 111 of one sub-unit to joint 112 of the adjacent sub-unit one builds a circle of two or more sub-units. In the flow channel 105 is a nozzle 2, with which new liquid to be treated is fed into the flow channel. The nozzle 2 feeds new liquid to be treated at quite a high speed towards the infeed connection 102. The volume flow rate of the liquid volume supplied by the nozzle is of the same magnitude as what filters through the membrane and finally exits from the first outlet connection 103. This fast flow of the nozzle arranges a cross flow on the surface of the membrane. At the same time the nozzle simultaneously transmits into the liquid space leading to the membrane the pressure needed for the filtering function of the membrane. In many cases one nozzle is sufficient, but e.g. in very large systems, comprising a number of membrane filter units connected to each other, it can be advantageous to use a number of nozzles as the source of the flow of the flow channel or possibly even of a number of flow channels to create suitable pressure increase and/or flow.

An alternate is to make the operation of this type of liquid treatment device cyclical such that with the apparatus there is alternately filtration and alternately the concentrated concentrate is removed. A rinsing connection 106, 106', comprising a valve 107, 107', is in the membrane filter unit 1 or in a branch from the second outlet connection 104, via which rinsing connection the concentrated concentrate is removed. Using a choke valve in place of the valve 107, 107' it is possible to maintain a set concentration of the concentrate and keep the process continuous and non-cyclical.

In practice it is often more advantageous to omit separate joints 111,112 between sub-units, but rather build the liquid path between sub-units so that the outlet connection 104, the inlet connection 102 and the jet pump comprising shaped flow channel 105 and nozzle 2 feeding the jet pump are integrated into a single unit bridging from one pressure vessel to the adjacent pressure vessel.

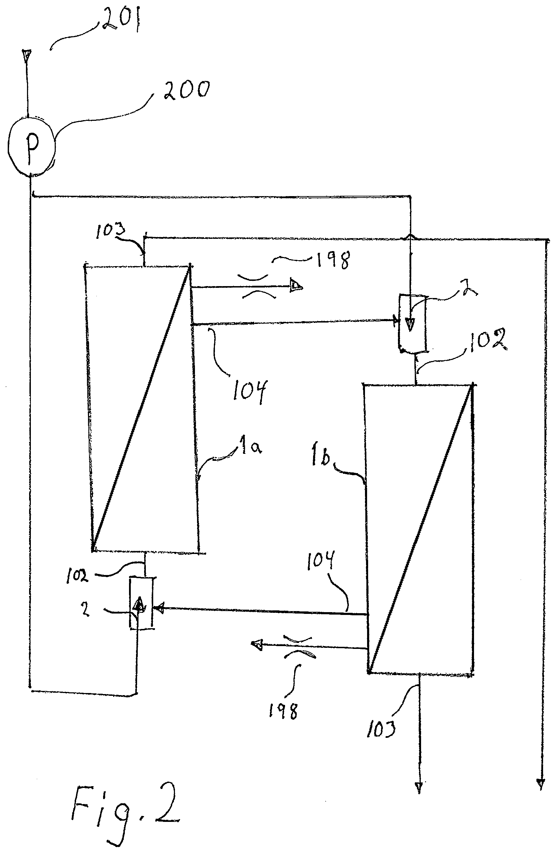

Fig. 2 diagrammatically presents an apparatus working according to the invention. Simply put, the basic structure can be regarded as being two coupled sub-units of Fig. 1. The operation of apparatus of Fig. 2 is described as water purification, albeit the liquid to be processed could be other than raw water to be purified. A pump 200 takes raw water, possibly already pre filtered or preprocessed, from source 201 and pumps it to nozzles 2 of jet pumps, which contribute as a part of the liquid paths from concentrate outlets 104 of the membrane filter units 1a, 1b to the liquid feed inlets 102 of the membrane filter units 1a, 1b in such manner that filter unit 1a forms a return path of concentrate back circulation of the filter unit 1b and filter unit 1b forms a return path of concentrate back circulation of the filter unit 1a. Permeate, e.g. purified water, is led out from both filter units 1a, 1b via permeate outlets 103.

A continuous type operation of this type of water treatment device is achieved by using choke valves 198. Certain amount of concentrate is allowed to leak out from the circulation via choke valves 198. By setting the leak speed the concentration of the concentrate can be set to an optimum. The optimum is selected according to which use parameter is important. If the raw water supply is limited or raw water is of high costs, then a higher yield is important. In case high cost electric power or limited availability electric power, then the energy efficiency may the most important optimization criteria.

## Claims

1. Filter apparatus comprising at least a first pressure vessel and a second pressure vessel, each pressure vessel containing a membrane filter, the membrane filter arranged according the cross-filtration principle so that liquid feed entered to a pressure vessel is divided to a permeate part and to a concentrate part, each pressure vessel comprising a feed inlet (102) for pressurized liquid feed and a concentrate outlet (104) for concentrate and a permeate outlet (103) for permeate, **characterized in that**, the concentrate outlet (104) of the second pressure vessel is connected to the feed inlet (102) of the first pressure vessel and the concentrate outlet (104) of the first pressure vessel is connected to the feed inlet (102)of the second pressure vessel, each liquid path connecting the concentrate outlet (104) of one pressure vessel and the liquid feed inlet (102) of the adjacent pressure vessel comprises a nozzle (2) configured for feeding pressurized liquid towards liquid feed inlet and creating liquid circulation between adjacent pressure vessels.

2. Filter apparatus according to claim 1, **characterized in that** each pressure vessel contains at least one reverse osmosis membrane filter.

3. Filter apparatus according to any of preceding claims, **characterized in that** a jet pump is joined to liquid feed inlet (102) of the first and second vessel by connecting the concentrate outlet (104) of a pressure vessel to the liquid feed inlet (102) of the adjacent pressure vessel.

## Patentansprüche

1. Filtervorrichtung, umfassend mindestens einen ersten Druckbehälter und einen zweiten Druckbehälter, wobei jeder Druckbehälter einen Membranfilter umfasst, wobei der Membranfilter nach dem Querfiltrationsprinzip funktioniert, sodass die in den einen Druckbehälter eingegebene Flüssigkeitszufuhr auf einen Permeatteil und einen Konzentratteil aufgeteilt wird, wobei jeder Druckbehälter einen Zufuhreinlass (102) für die druckbeaufschlagte Flüssigkeitszufuhr und einen Konzentratauslass (104) für das Konzentrat und einen Permeatauslass (103) für das Permeat umfasst, **dadurch gekennzeichnet, dass** der Konzentratauslass (104) des zweiten Druckbehälters an dem Zufuhreinlass (102) des ersten Druckbehälters angeschlossen ist, und der Konzentratauslass (104) des ersten Druckbehälters an dem Zufuhreinlass (102) des zweiten Druckbehälters angeschlossen ist, wobei jede Flüssigkeitsverbindung, die den Konzentratauslass (104) eines Druckbehälters mit dem Flüssigkeitszuführungseinlass (102) des benachbarten Druckbehälters verbindet, eine Düse (2) umfasst, die konfiguriert ist, um druckbeaufschlagte Flüssigkeit in Richtung zum Flüssigkeitszuführungseinlass zuzuführen und eine Flüssigkeitszirkulation zwischen benachbarten Druckbehältern zu erzeugen.

2. Filtervorrichtung nach Anspruch 1, **dadurch gekennzeichnet, dass** jeder Druckbehälter mindestens einen Umkehrosmose-Membranfilter enthält.

3. Filtervorrichtung nach einem der vorhergehenden Ansprüche, **dadurch gekennzeichnet, dass** eine Strahlpumpe an dem Flüssigkeitszufuhreinlass (102) des ersten und zweiten Behälters angeschlossen ist, indem der Konzentratauslass (104) des einen Druckbehälters mit dem Flüssigkeitszufuhreinlass (102) des benachbarten Druckbehälters angeschlossen ist.

## Revendications

1. Appareil de filtration comprenant au moins une première cuve sous pression et une seconde cuve sous pression, chaque cuve sous pression contenant un filtre à membrane, le filtre à membrane étant agencé selon le principe de filtration croisée de sorte qu'une alimentation en liquide introduite dans une cuve sous pression est divisée en une partie de perméat et en une partie de concentré, chaque cuve sous pression comprenant une entrée d'alimentation (102) pour une alimentation en liquide sous pression et une sortie de concentré (104) pour un concentré et une sortie de perméat (103) pour un perméat, **caractérisé en ce que** la sortie de concentré (104) de la seconde cuve sous pression est raccordée à l'entrée d'alimentation (102) de la première cuve sous pression et la sortie de concentré (104) de la première cuve sous pression est raccordée à l'entrée d'alimentation (102) de la seconde cuve sous pression, chaque trajet de liquide raccordant la sortie de concentré (104) d'une cuve sous pression et l'entrée d'alimentation en liquide (102) de la cuve sous pression adjacente comprend une buse (2) configurée pour alimenter du liquide sous pression en direction de l'entrée d'alimentation en liquide et créer une circulation de liquide entre des cuves sous pression adjacentes.

2. Appareil de filtration selon la revendication 1, **caractérisé en ce que** chaque cuve sous pression contient au moins un filtre à membrane à osmose inverse.

3. Appareil de filtration selon l'une quelconque des revendications précédentes, **caractérisé en ce qu'**une pompe à jet est reliée à l'entrée d'alimentation en liquide (102) des première et seconde cuves en raccordant la sortie de concentré (104) d'une cuve sous pression à l'entrée d'alimentation en liquide (102) de la cuve sous pression adjacente.
